**Europäisches Patentamt**

**European Patent Office**

**Office européen des brevets**

(19)

(11) Veröffentlichungsnummer: **0 063 354**
**A1**

(12) **EUROPÄISCHE PATENTANMELDUNG**

(21) Anmeldenummer: **82103128.3**

(22) Anmeldetag: **14.04.82**

(51) Int. Cl.³: **G 06 F 15/24**
**G 01 G 19/42**

(30) Priorität: **15.04.81 DE 3115191**

(43) Veröffentlichungstag der Anmeldung:
**27.10.82 Patentblatt 82/43**

(84) Benannte Vertragsstaaten:
**FR GB IT NL SE**

(71) Anmelder: **MAATSCHAPPIJ VAN BERKEL'S PATENT N.V.**
**P.O. Box 6018 Keileweg 5**
**NL-3029 BR Rotterdam(NL)**

(72) Erfinder: **v. Alphen, Eduard Francois Marie**
**Lange Voren 3**
**NL-Oosterhout(NL)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114 Postfach 20 02 10**
**D-5600 Wuppertal 2(DE)**

(54) Verfahren und Vorrichtung zur Ermittlung der Vorratsmenge von Gütern in einem Lager.

(57) Bei einem Verfahren und einer Vorrichtung zur Ermittlung der Vorratsmenge von Gütern (11' bis 18') in einem Lager (10) sind zahlreiche Ablageorte (11 bis 18) für verschiedene Güter (11' bis 18') vorgesehen. Jeder Ablageort (11 bis 18) nimmt jeweils nur eine bestimmte Gutsorte (11' bis 18') auf und der Zu- und Abgang der Güter ins Lager (10) und aus dem Lager (10) wird festgestellt. Für eine automatische schnelle und zuverlässige Bestimmung der jeweils abgelegten aktuellen Vorratsmenge (21 bis 28) von Einheiten (11' bis 18') jeder Gutsorte im Lager (10) wird sortenweise das Gesamtgewicht der die einzelnen Ablageorte (11 bis 18) jeweils belastenden Güter (11' bis 18') gemessen und dann diese Gesamtgewichte mit den vorausermittelten bekannten Einzelgewichten der Einheit der jeweiligen Gutsorte divisionsmäßig verrechnet. Dazu bildet man die Ablageorte (11 bis 18) für die sortenweise getrennten Güter (11' bis 18') jeweils als Lastaufnahme einer Waage aus.

FIG. 1

- 1 -

Verfahren und Vorrichtung zur Ermittlung der Vorratsmenge von Gütern in einem Lager

Die Erfindung bezieht sich auf ein Verfahren und auf eine Vorrichtung zur Ermittlung der Vorratsmenge von Gütern in einem Lager. Ein solches Lager umfaßt zahlreiche Ablageorte für verschiedene Güter. An jedem Ablageort sind, nach Sorten getrennt, die Güter aufgenommen. Der Zu- und Abgang der Güter ins Lager und aus dem Lager wird registriert.

Für die Herstellung eines Produkts ist die Einhaltung einer bestimmten Vorratsmenge von Gütern erforderlich, die als Ausgangsmaterial in fester oder flüssiger Form, als Einzelteile und/oder als Halbfabrikate, bereitgehalten werden müssen. Diese vorübergehend zu lagernden Gegenstände sollen nachfolgend kurz als "Güter" bezeichnet werden, die nach Gutsorten getrennt an einem oder mehreren Ablageorten im Lager aufbewahrt werden. Diese Ablageorte können aus ortsfesten Regalen mit verschiedenen Fächern, aus Arbeitstischen oder aus Transportwagen bestehen, die zu den verschiedenen Stellen einer Produktionsstätte verfahrbar sind. Derjenige Ort im Lager, der Güter in sich einheitlicher Sorte aufnimmt, soll nachfolgend kurz "Ablageort" bezeichnet werden.

Für den Verkauf fertiger Artikel, insbesondere aber für die Vorratshaltung in einem Produktionsprozeß eines bestimmten Produktes, kommt es darauf an, bestimmte Vorratsmengen solcher Güter bereitzuhalten, weshalb es auf die Ermittlung der jeweils verfügbaren Vorratsmenge von Gütern entscheidend ankommt. Die Größe der dabei erforderlichen Vorratsmenge muß zwei einander widersprechenden Bedingungen genügen. Einmal soll die Menge der jeweils verfügbaren Güter möglichst klein sein, damit ein nicht zu großer Platzbedarf im Lager erforderlich ist und ein Zinsverlust durch eine zu große Menge von Gütern im Lager sich ergibt. Andererseits soll die Vorratsmenge ausreichend groß sein, um die Auslieferung von Gütern aus dem Lager nicht zu unterbrechen oder das Risiko einer Produktionsunterbrechung bei der Herstellung eines bestimmten Produkts einzugehen. Dies hängt von der Anzahl der pro Zeiteinheit benötigten Güter der verschiedenen Sorten ab. Diese Bedarfsgröße kann natürlich im Laufe der Zeit Schwankungen unterliegen, die einkalkuliert werden müssen. Es gibt zwischen den beiden gegensätzlichen Bedingungen eine optimale Vorratsmenge für jede Gutsorte, die bei der Lagerführung möglichst eingehalten werden soll. Daraus rechnet sich auch die untere Grenze der Vorratsmenge im Lager, welche, wenn sie in der Lagerführung erreicht ist, einen entsprechend großen Zugang neuer Güter in das Lager steuert.

Zur Vorratsbeherrschung in einem Lager kommt es daher darauf an, die Vorratsmenge der verschiedenen Güter in jedem Zeitpunkt möglichst genau zu kennen. Bei den bekannten Verfahren geht man dabei in folgender Weise vor: Nach Einrichtung des Lagers wird eine Bestandsaufnahme der einzelnen Vorratsmengen der verschiedenen Güter gemacht. Diese im Startzeitpunkt sich ergebenden Werte des Lagers werden festgehalten. Während der danach folgenden Führung des Lagers wird die Anzahl der Einheiten jeder Gutsorte festgehalten, die in das Lager zugeführt oder aus dem Lager abgeführt werden, und jeweils mit dem vorausermittelten Bestand der verschiedenen Güter verrechnet. Die Daten des Zu- und Abgangs werden von einer Bedienungsperson mit der Hand in die Eingabeeinrichtung eines Rechners getippt, was in mehrfacher Hinsicht nachteilig ist. Bei großen Lagern mit starker Fluktuation der Güter ergibt sich ein starker Arbeitsanfall bei der Handeingabe der Daten, weshalb ein großer Personalbedarf hierzu entsteht. Ein schwerwiegender Nachteil sind aber die Irrtümer, die sich aufgrund menschlichen Versagens während der Handeingabe oderin der vorausgehenden Datenübermittlung ergeben. Es ist nicht sichergestellt, daß die schriftlich vorliegenden Daten mit den tatsächlich in einer bestimmten Phase zu- und abgehenden Gütern des Lagers übereinstimmen. Ferner ergeben sich Verzögerungen zwischen diesen tatsächlichen Zu- und Abgängen einerseits und der
Eingabe der betreffenden Daten andererseits, weshalb nicht immer der aktuelle Stand des Lagers verfügbar ist. Die erwähnten Fehler in der Dateneingabe und in der Datenermittlung führen im übrigen, selbst wenn sie im Einzelfall nur unbedeutend sind, aufgrund ihrer Aufsummierung im Laufe der Zeit
zu beträchtlichen Abweichungen zwischen dem angegebenen und tatsächlichen Stand des Lagers in einem späteren Zeitpunkt. Um dies auszuschliessen, ist es erforderlich, in kürzeren Abständen immer wieder eine tatsächliche Bestandaufnahme im Lager durchzuführen, was sehr zeit- und personalaufwendig ist sowie die Führung des Lagers behindert. Um nicht zu oft eine
aufwendige Bestandaufnahme des Lagers durchführen zu müssen, deren Ergebnisse im übrigen auch aufgrund menschlicher Irrtümer fehlerhaft sein
kann, ist man genötigt, vorsichtshalber größere Vorratsmengen der verschiedenen Gutsorten im Lager bereitzuhalten, als es sonst nötig wäre.

Der Erfindung liegt die Aufgabe zugrunde, ein einfach und schnell auszuführendes Verfahren zur Ermittlung der Vorratsmenge von Gütern in einem
Lager zu entwickeln, das möglichst fehlerlos den tatsächlichen Stand der Vorratsmenge im Lager angibt.

Das erfindungsgemäße Verfahren zeichnet sich durch eine unmittelbare Bestimmung der jeweils abgelegten aktuellen Vorratsmengen von Einheiten jeder
Gutsorte im Lager aus, indem das sortenweise Gesamtgewicht der die einzelnen Ablageorte jeweils belastenden Güter gemessen wird, ggs. die ermittelten Gesamtgewichte von die gleiche Gutsorte aufnehmenden verschiedenen
Ablageorten aufaddiert werden, und dann diese Gesamtgewichte mit den
voraus ermittelten bekannten Einzelgewichten der Einheit der jeweiligen Gutsorte divisionsmäßig verrechnet werden.

Über diese Gewichtsbestimmung wird der tatsächliche jeweilige Stand der
Vorratsmengen der verschiedenen Güter im Lager zuverlässig ermittelt. Eine
zeitaufwendige, menschlichen Fehlern unterliegende Dateneingabe von Zu-und Abgängen der Güter ist entbehrlich. Die im zugehörigen jeweiligen Ablageort im Lager hinzugeführte oder abgeführte Teilmenge der jeweiligen Gutsorte wirkt sich sofort in einer entsprechenden Änderung des an dem jeweiligen Ablageort ermittelten Gesamtgewicht aus und wird bei der automatischen Verrechnung mit dem Einzelgewicht der betreffenden Einheit dieser Gutsorte erfaßt. Der jeweilige Bestand im Lager ist somit jederzeit anzuzeigen bzw. abzurufen. Die Lagerführung ist dadurch außerordentlich vereinfacht.

Die Erfindung bezieht sich auch auf eine Vorrichtung zur Durchführung dieses Verfahrens und zeichnet sich dadurch aus, daß die einzelnen Ablageorte der Güter im Lager jeweils als Lastaufnahmen einer Waage ausgebildet sind und die Datenausgänge dieser Waagen mit den Eingängen eines zentralen Rechners durch eine automatische Datenübermittlung verbunden sind und der Rechner Datenspeicher für die jeweiligen Einzelgewichte der Einheit der verschiedenen Gutsorten aufweist.

Als "Waage" eignet sich ein Gewichtsermittlungsgerät beliebiger an sich bekannter Bauart. Nicht erforderlich ist es dazu, besondere Waagen vorzusehen, weil man vorteilhaft die Gestellteile des Ablageorts für die verschiedenen Güter als Gewichts-Meßwerk zur Ermittlung des Gesamtgewichts ausbilden kann. Dies kann geschehen, indem man Gestellteile mit Dehnungsmeßstreifen versieht, welche die Verformungen des Gestells aufgrund des jeweils wirkenden Gesamtgewichts der dort befindlichen Gutsorte messen. Dazu kann man die Fächer eines Regals oder die Aufnahmeplatten eines Arbeitstisches als ein mit Dehnungsmeßstreifen od.dgl. ausgerüsteter Biegebalken ausbilden. Verwendet man einen Transportwagen zur Aufnahme einer einheitlichen Gutsorte, so läßt sich auf diese Weise das Fahrgestell als ein Gewichts-Meßwerk ausbilden.

Die Verbindung zwischen den verschiedenen Ablageorten und dem zentralen Rechner kann in verschiedener Weise geschehen. Im einfachsten Fall verwendet man hierzu eine Kabelverbindung, die auch im Falle von Transportwagen verwendbar ist, wenn man die Anschlußkabel jeweils über Steckkupplungen od.dgl. an eine zum Rechner führende Sammelleitung verbindet. Einfacher ist es jedoch, für die Datenübermittlung eine drahtlose Verbindung zu verwenden, die aus einem Sender und einem Empfänger zwischen den verschiedenen Ablageorten und dem Rechner besteht, die über Funkwellen, Infrarotstrahlung, Ultraschall od.dgl. wirksam sind.

Der Rechner ist mit Eingabe-, Anzeige-, Registrier-, Steuer und/oder Alarmeinrichtungen versehen, wozu auch Drucker hinzukommen können, welche die Fluktuation der Güter im Lager und den jeweiligen Lagerbestand dokumentieren können.

Das erfindungsgemäße Verfahren und die Vorrichtung ermöglichen nebenher auch noch eine ideale Diebstahlsicherung des Lagers. In der Ruhephase des Lagers, also z.B. nachts, wenn der Lagerbetrieb ruht, wird das ermittelte Gesamtgewicht der verschiedenen Vorratsmengen festgehalten, was ggfs. ablageortweise geschieht. Jede unerlaubte Entnahme eines Gutes äußert sich als ein Gewichtsschwund, der festgestellt und zum Auslösen eines Alarmsignals verwendet wird. Selbst wenn ein Dieb dieses Überwachungssystem kennt und bei der Entnahme eines Gutes eine gewichtsmäßig der entnommenen Einheit des Gutes entsprechende Attrappe auf den Ablageort ablegt, äußert sich dies in einer mindestens zeitweiligen Änderung des Gesamtgewichts, weil es dem Dieb bei aller Geschicklichkeit kaum gelingen wird, auf Bruchteile von Sekunden genau die Entnahme des Gutes und das Aufbringen der Attrappe zu bewirken, wenn die verwendeten Gewichtsermittlungsgeräte an den Ablageorten, wie aufgrund der verfügbaren Meßwerke gewährleistet ist, schnell ansprechen.

Zu Eichzwecken bei Ermittlung des Einzelgewichts einer Einheit jeder Gutsorte empfiehlt es sich, den Rechner mit Präzisionswaagen zu versehen, die mit dem Speicher des Rechners verbunden sind. Es versteht sich, daß solche Einheiten einer Gutsorte bei kompakten Waren aus einem Einzelstück und bei Schüttgut oder Flüssigkeiten aus entsprechenden losen oder verpackten Teilmengen bestehen können.

Schließlich empfiehlt es sich, jedem Ablageort ein individuelles Kennsymbol zuzuordnen, insbesondere in Form einer festen Code-Nummer, die beim Messen des ablageortweisen Gesamtgewichts zugleich abgerufen und festgehalten wird. Dadurch ist bei den im Rechner eingehenden Daten klargestellt, von welcher Gutsorte das ermittelte Gewicht kommt, weshalb es vom Rechner selbsttätig zu den in seinen Speichern befindlichen Einzelgewichten der Einheit in Beziehung gebracht wird. Darüberhinaus können diese Code-Nummern auch dazu verwendet werden, die Stelle innerhalb des Lagers zu ermitteln, an der sich jeweils die Ablage befindet, von der die automatische Datenübermittlung kommt. Dies ist insbesondere bei als Ablageorten dienenden verfahrbaren Transportwagen vorteilhaft. Bei der vorbeschriebenen Diebstahlsicherung ist dadurch auch zu ermitteln, an welchem Ort der verfübaren umfangreichen Räumlichkeiten des Lagers der Diebstahl jeweils erfolgt.

Weitere Maßnahmen und Vorteile der Erfindung sind aus den Ansprüchen, der nachfolgenden Beschreibung sowie den Zeichnungen ersichtlich, worin die Erfindung in mehreren Ausführungsbeispielen dargestellt ist. Es zeigen:

Fig. 1  in schematischer Darstellung ein umfangreiches Lager, an welchem das neue Prinzip der Erfindung erläutert wird,

Fig. 2  schematisch in Seitenansicht ein ortsfest im Lager aufgestelltes Regal, welches verschiedene Ablageorte für gleiche oder verschiedene Güter aufweist,

Fig. 3  einen verfahrbaren Transportwagen mit entsprechenden mehrfachen Ablageorten für gleiche oder verschiedene Gutsorten,

Fig. 4  in vergrößerter schematischer Ansicht die beispielshafte Ausbildung eines Ablageortes zur Aufnahme einer bestimmten Gutsorte und

Fig. 5  die mögliche Ausbildung des Fahrgestells eines in Fig. 3 gezeigten Transportwagens für eine einheitliche Gutsorte als Gewichts-Meßwerk.

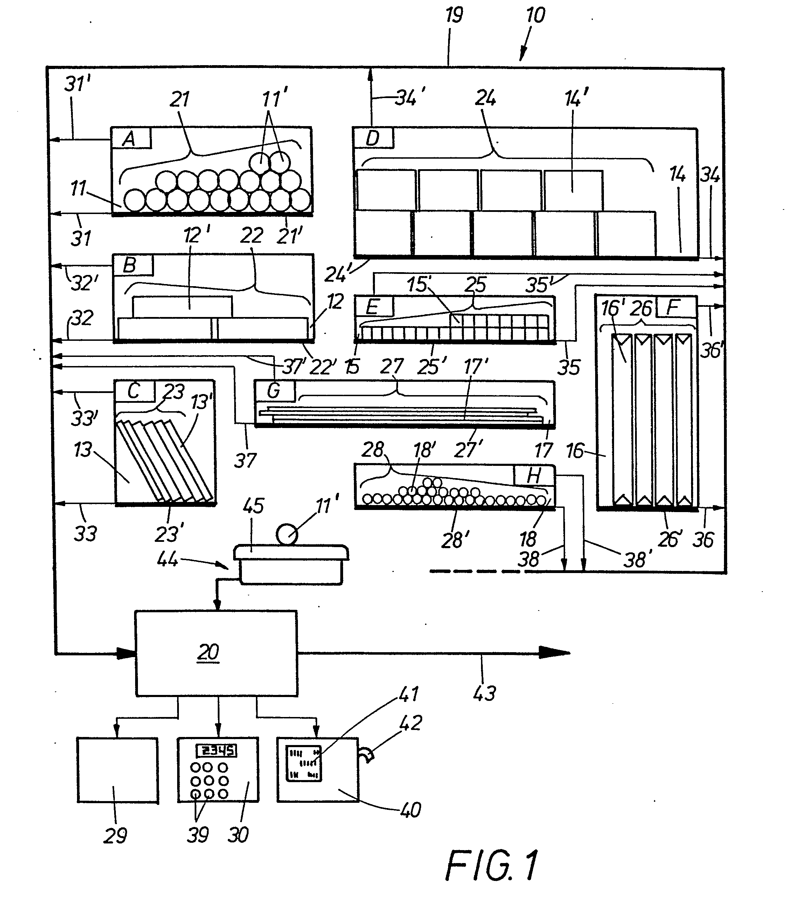

In Fig. 1 ist schematisch ein Lager 1o gezeigt, welches zahlreiche Ablageorte 11 bis 18 für Gut 11' bis 18' unterschiedlicher Sorten aufweist. Das Gut ist sortenweise deponiert. Auf einem der Ablageorte befindet sich stets nur Gut einer einheitlichen Gutsorte 11' bis 18', jedoch können an unterschiedlichen Ablageorten natürlich auch Gut einer Sorte vorhanden sein. Wie bereits eingangs erwähnt wurde, können als "Gut" Einzelstücke, Schüttgut oder Flüssigkeiten vorgesehen sein. Zur Führung des Lagerbestands ist das Gut in Einheiten gegliedert, die im Falle von Schüttgut oder von Flüssigkeiten zweckmäßigerweise in Packungen oder Behältern zusammengefaßt ist. Zur Verdeutlichung sind in Fig. 1 die einzelnen Gut-Einheiten 11' bis 18' dargestellt, die jeweils zu einander gleich gestaltet sind und daher das gleiche Einzelgewicht aufweisen. Zur Ermittlung des Lagerbestands kommt es nunmehr darauf an, die Anzahl 21 bis 28 der Einheiten 11' bis 18' der verschiedenen Gutsorten zu ermitteln.

Dazu ist die Grundfläche eines jeden Ablageortes 11 bis 18, welche die jeweilige Menge 21 bis 28 der jeweiligen Gutsorte 11' bis 18' aufnimmt, als Lastaufnahmeplatte 21' bis 28' einer Waage ausgebildet, wie in Fig. 1 symbolisch angedeutet ist. Das Gesamtgewicht der auf dieser Platte 21' bis 28' einwirkenden Gutmenge 21 bis 28 wird von jeder diesen Waagen ermittelt und über eine angedeutete jeweilige Datenleitung 31 bis 38 einer Sammelleitung 19 zugeführt, welche die Räumlichkeiten des Lagers 1o durchzieht. Diese Sammelleitung 19 ist an einen Rechner 2o angeschlossen, der mit einem Speicher 29 für Einzelgewichte der Einheiten der verfügbaren Gutsorten 11' bis 18' versehen ist. Der Rechner 2o kann zusätzlich mit einem Eingabegerät 3o versehen sein, das eine Tastatur 39 sowie eine angedeutete Tastaturanzeige aufweist, wie auch mit einem Ausgabegerät 4o ausgerüstet sein, welches die vom Rechner 2o ermittelten Daten auf einem Bildschirm 41 anzeigt oder über einen zugehöriger Drucker auf einem Aufzeichnungsträger 42, wie z.B. eines Papierstreifens, registriert.

Jedem der zu unterscheidenden Ablageorte 11 bis 18 ist ein bestimmtes Kennsymbol, insbesondere eine Code-Nummer A bis H, zugeordnet, die beim Abruf der von den einzelnen Waagen der Lastplatten 21' bis 28' ermittelten Gesamtgewichte jeder Gutsorte 11' bis 18' über entsprechende Code-Leitungen 31' bis 38' durch die Sammelleitung 19 an den Rechner 2o gelangen. Dadurch kann der Rechner 2o feststellen, von welchem der zahlreichen Ablageorte 11 bis 18 das Gesichtssignal kommt und damit zugleich berück-

sichtigen, welches Einzelgewicht die jeweilige Einheit 11' bis 18' dieser Gutsorte aufweist. Dadurch kann der Rechner 2o bei seiner Arbeit das jeweils richtige Einzelgewicht aus seinem Speicher 29 abrufen und mit dem eingehenden Gesamtgewicht der vorhandenen Gutmenge 21 bis 28 jeweils divisionsmäßig verrechnen, woraus sich im ERgebnis die tatsächlich vorhandene Anzahl oder Menge 21 bis 28 der verschiedenen Gutsorten 11' bis 18' jeweils ergibt. Diese Ergebnisse werden durch das Ausgabegerät 4o, sei es auf dem Bildschirm 41, sei es auf dem Aufzeichnungsträger 42, angegeben und bedarfsweise in weiteren Speichern für einen späteren Abruf oder eine nachfolgende Auswertung festgehalten. Diese Daten können ferner über eine Leitung 43 ein nicht näher gezeigtes Bevorratungsgerät über die jeweiligen aktuellen Verhältnisse im Lager 1o informieren. Ein solches Bevorratungsgerät steuert dann mengenmäßig oder anzahlmäßig die Zufuhr neuen Gutes 11' bis 18' in das Lager. Sobald diese neuen Gutmengen an ihren zugehörigen Ablageorten 11 bis 18 gutsortenweise abgelegt sind, äußert sich dies sofort in einer entsprechenden Änderung des Gesamtgewichts der ablageortweise eingestapelten Teilmengen 21 bis 28, was über die geschilderten Leitungen 31 bis 38 unter Berücksichtigung der von den Code-Leitungen 31' bis 38' zugehenden Informationen vom Rechner 2o selbsttätig berücksichtigt und erfaßt wird. Dadurch korrigiert sich das Lager 1o in seiner Anzeige am Ausgabegerät 4o automatisch auf den jeweiligen aktuellen Stand. Ein solches Bevorratungsgerät an der Leitung 43 kann natürlich auch die Ausgabe von Gut steuerungsmäßig beeinflussen.

Die Entnahme von Gut aus den einzelnen Ablageorten 11 bis 18 des Lagers 1o äußert sich in entsprechender Weise durch eine Änderung des an den Lastplatten 21' bis 28' ermittelten Gesamtgewichts jeder Gutsorte 11' bis 18', was in analoger Weise von dem Rechner 2o festgestellt und dem Ausgabegerät 4o angezeigt wird. Dies kann in einer Ruhephase des Lagers zu der bereits oben erwähnten Diebstahlsicherung des Lagers 1o ausgenutzt werden. Wird beispielsweise eine Einheit 18' in einer solchen Ruhephase des Lagers vom Ablageort 28 entfernt, so registriert der Rechner 2o diese Gewichtsänderung sofort und leitet sie an das Ausgabegerät 4o weiter, an welchem sich dann eine Alarmeinrichtung angeschlossen befindet, die ein Notsignal auslöst und dabei wegen der über die Code-leitung 38' zugeführten Code-Signale H aufgrund der Ermittlungen des Rechners 2o zugleich angeben kann, daß am Ablageort 18 ein solcher Diebstahl begangen wurde.

Die jeweiligen Einzelgewichte der verschiedenen Gut-Einheiten 11' bis 18' können auf verschiedene Weise den Speichern 29 der Rechner zugeführt werden. Dazu bietet sich zunächst das Eingabegerät 3o an. Dort wird, unter Verwendung der Tastatur 39, sowohl das in diesem Fall aus der Herstellung dieses Gutes aktenkundige Einzelgewicht der betreffenden Ware als auch ihre Code-Nummer angegeben, was in dem angedeuteten Anzeigefeld des Eingabegerätes 3o zu Kontrollzwecken ablesbar ist. Diese Werte gelangen dann in den Speicher 29, wo sie für die spätere Lagerhaltung dem Rechner 2o verfügbar sind. Eine alternative Möglichkeit zur Eingabe eines Einzelgewichts bietet eine Präzisionswaage 44, die am Rechner 2o angeschlossen ist. Auf deren Lastschale 45 wird eine Einheit zu Eichzwecken aufgelegt, wofür im dargestellten Ausführungsbeispiel von Fig. 1 ein Warenstück 11' gerade verwendet wird. Das ermittelte Einzelgewicht wird wieder im Speicher 29 des Rechners 2o festgehalten und steht für die weitere Arbeit zur Verfügung.

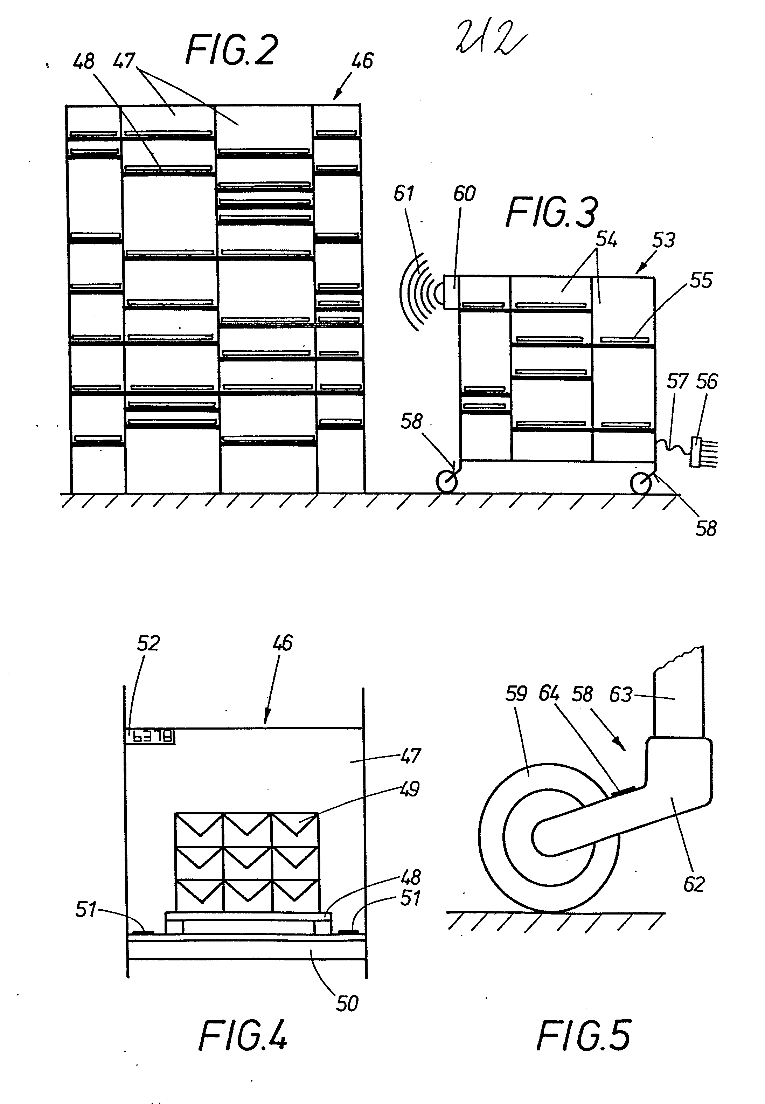

Im Fall der Fig. 2 ist ein als Lager oder Teil eines Lagers dienendes Regal 46 gezeigt, dessen einzelne Fächer 47 als Ablageorte im Sinne der Erfindung verwendet werden. Die Böden 48 dieser Fächer sind jeweils als Lastaufnahmeplatten einer Waage ausgebildet, deren beispielshafte Ausbildung aus Fig. 4 näher zu erkennen ist. Ausweislich der Fig. 4 ist der Boden 48, der einen Stapel von Wareneinheiten 49 aufnimmt, mit einem Biegebalken 5o versehen, der aufgrund der wirkenden Last sich verformt. Diese Verformung wird von symbolisch angedeuteten Dehnungsmeßstreifen 51 abgefühlt und ein die Größe dieser Last entsprechendes Meßsignal über eine nicht näher gezeigte Leitung dem zugehörigen Rechner zugeführt. Das dargestellte Fach 47 ist zwecks besserer Identifizierung der darin eingestapelten Sorte von Wareneinheiten 49 und ggfs. zur Unterscheidung anderer benachbarter Fächer mit einer Code-Nummer 52 versehen. Bei der Durchgabe des Gewichtssignals wird zugleich diese Code-Nummer 52 in verschlüsselter Form dem Rechner zugeführt. Statt einer ringförmigen Sammelleitung könnte natürlich jeder Ablageort, wie z.B. das dargestellte Fach 47, über eigene sternförmige Leitungsverbindungen mit dem gemeinsamen Rechner verbunden sein.

In Fig. 3 ist eine andere Verbindungsmöglichkeit gezeigt. Hier ist das Lager bzw. ein Teil des Lagers in Form eines Transportwagens 53 ausgebildet, der bedarfsweise voneinander unabhängige Ablageorte, z.B. in Form von Fächern 54, aufweisen kann. Sofern in die einzelnen Fächer bedarfsweise unterschiedliche Gutsorten, fachweise getrennt, untergebracht werden sollen, ist jeder der Fachböden 55, wie in Fig. 3 angedeutet ist, als Lastplatte einer Waage ausgebildet, wofür z.B. die in Fig. 4 näher erläuterte Konstruktion auch hier verwendet werden kann. Das von jedem der als Meßwerk dienenden Fachböden 55 ermittelte Gewicht kann über eine Leitung 57 einem Stecker 56 zugeführt werden, der in einer Steckdose eingekuppelt wird, die sich in der Nähe des Ortes befindet, an welchen dieser Transportwagen 53 verfahren worden ist. Eine solche Lagerhaltung ist bei einer Produktionsstätte erwünscht, wo die verschiedenen Elemente zur Herstellung eines Produkts zu einer bestimmten Stelle einer Fließband-Fertigung gebracht werden müssen.

Alternativ zu einer solchen Kabelverbindung 57 könnte der Transportwagen 53 in drahtloser Verbindung mit dem zugehörigen Rechner stehen, wenn man am Transportwagen 53 einen Sender 6o vorsieht, der mittels Funkwellen oder Ultraschall, wie bei 61 in Fig. 3 angedeutet ist, die ermittelten Signale der verschiedenen Gewichte und die Code-Nummern einem zugehörigen Empfänger am Rechner zuführt. In diesem Falle kommt es auf das Einkuppeln eines Steckers 56 zwecks Verbindung mit dem Rechner nicht mehr an. Über einen solchen Sender 6o läßt sich zugleich die Position des Transportwagens 53 innerhalb der Räumlichkeiten des Lagers oder der Produktionsräume genau orten. Dadurch ist es einem an den Rechner angeschlossenen Bevorratungsgerät möglich, festzustellen, welcher Transportwagen an welcher Stelle der Produktionsstätte mit neuen Guteinheiten versorgt werden muß, weil sein Vorrat zu Ende zu gehen droht. So läßt sich auch ein kompletter gefüllter neuer Wagen an dem ermittelten Ort der Produktionsstätte bringen und kann den entleerten alten Wagen ersetzen. Dadurch läßt sich der Produktionsablauf bequem überwachen und steuern.

Sofern ein solcher Transportwagen 53 nur ein Gut einer einheitlichen Sorte aufnimmt, was bei einer Fließbandarbeit häufig vorkommt, braucht nicht jedes einzelne Fach 54 mit einem Gewichts-Meßwerk versehen zu sein, vielmehr genügt es dann, das Fahrwerk 58 eines solchen Transportwagens als ein Gewichts-Meßwerk auszubilden. Dies ist näher in Fig. 5 erläutert. Hier ist eine einzelne Rolle 58 des Fahrwerks gezeigt, die über eine Gabel 62 mit dem Fuß 63 des Transportwagens verbunden ist. In diesem Fall ist die Gabel 62 als biegsames Element ausgebildet, deren Verformung als Maß zur Gewichtsermittlung verwendet wird. Dies geschieht am einfachsten wieder durch Dehnungsmeßstreifen 64, die an der Gabel 62 angebracht sind und deren Formänderung abfühlen sowie über Kabelverbindungen oder durch drahtlose Übermittlung die aktuellen Daten dem zugehörigen Rechner übermitteln. Natürlich könnte man auch übliche Gewichts-Meßdosen in den Kraftfluß des Gewichts zwischen dem Fuß 63 und der Rolle 59 des Fahrwerks 58 anordnen, wenn man die geschilderte doppelte Funktion des Fahrwerks zu Transportzwecken einerseits und zur Gewichtsabstimmung andererseits nicht ausnutzen will.

Aufstellung der Bezugszeichen:

| | |
|---|---|
| 10 | Lager |
| 11<br>12<br>13<br>14<br>15<br>16<br>17<br>18 | Ablageort |
| 11'<br>12'<br>13'<br>14'<br>15'<br>16'<br>17'<br>18' | Gutsorte, Einheit |
| 19 | Sammelleitung |
| 20 | Rechner |
| 21<br>22<br>23<br>24<br>25<br>26<br>27<br>28 | Menge bzw. Anzahl der Einheiten |
| 21'<br>22'<br>23'<br>24'<br>25'<br>26'<br>27'<br>28' | Lastaufnahme, Platte einer Waage |
| 29 | Speicher |
| 30 | Eingabegerät |
| 31<br>32<br>33<br>34<br>35<br>36<br>37<br>38 | Datenleitung |

| 31' |  |  |  | A |  |
|---|---|---|---|---|---|
| 32' |  |  |  | B |  |
| 33' |  |  |  | C |  |
| 34' | } | Code-Leitung |  | D | } |
| 35' |  |  |  | E |  |
| 36' |  |  |  | F |  |
| 37' |  |  |  | G |  |
| 38' |  |  |  | H |  |

Code-Nummer eines Ablageortes

39   Tastatur von 30

40   Ausgabegerät

41   Bildschirm

42   Aufzeichnungsträger

43   Leitung

44   Präzisionswaage

45   Lastschale

46   Regal

47   Fach

48   Boden

49   Wareneinheit

50   Biegebalken

51   Dehnungsmeßstreifen

52   Code-Nummer

53   Transportwagen

54   Fach

55   Fachboden

56   Stecker

57   Leitung

58   Fahrwerk

59   Rolle

60   Sender

61   Funkwelle etc.

62   Gabel

63   Fuß

64   Dehnungsmeßstreifen

Patentansprüche :

1. Verfahren zur Ermittlung der Vorratsmenge von Gütern in einem Lager, welches zahlreiche Ablageorte für verschiedene Güter aufweist, jeder einheitliche Ablageort jeweils nur eine bestimmte Gutsorte aufnimmt und der Zu- und Abgang der Güter ins Lager und aus dem Lager festgestellt wird, g e k e n n z e i c h n e t   d u r c h  eine unmittelbare Bestimmung der jeweils abgelegten aktuellen Vorratsmenge (21 bis 28) von Einheiten (11' bis 18') jeder Gutsorte im Lager (1o), indem das sortenweise Gesamtgewicht der die einzelnen Ablageorte (11 bis 18) jeweils belastenden Güter (11' bis 18') gemessen (21' bis 28') wird, ggfs. die ermittelten Gesamtgewichte von die gleiche Gutsorte (11' bis 18') aufnehmenden verschiedenen Ablageorten (11 bis 18) aufaddiert werden, und dann diese Gesamtgewichte mit den vorausermittelten bekannten Einzelgewichten der Einheit (11' bis 18') der jeweiligen Gutsorte verrechnet werden.

2. Verfahren nach Anspruch 1, dadurch gekennzeichnet, daß - in der Ruhephase des Lagers - das ermittelte Gesamtgewicht der Vorratsmenge (21 bis 28) ggfs. ablageortweise (11 bis 18), festgehalten wird und jede unerlaubte Entnahme eines beliebigen Gutes (11' bis 18') aus dem Lager (1o) als zumindest zeitweilige Änderung des Gesamtgewichts, insbesondere als Gewichtschwund, festgestellt und zum Auslösen eines Alarmsignals verwendet wird.

3. Verfahren nach Anspruch 1 oder 2, dadurch gekennzeichnet, daß jedem Ablageort (11 bis 18) ein individuelles Kennsymbol (A bis H), insbesondere eine feste Code-Nummer, zugeordnet wird, die beim Messen des ablageortweisen Gesamtgewichts zugleich abgerufen wird.

4. Verfahren nach Anspruch 3, dadurch gekennzeichnet, daß die Stelle, von der ein Abruf des Kennsymbols ausgeht, zur jeweiligen Ortsbestimmung einer verfahrbaren Ablage (53) der Güter innerhalb der verfügbaren Räumlichkeiten des Lagers (1o) verwendet wird.

5. Verfahren nach einem oder mehreren der Ansprüche 1 bis 4, dadurch gekennzeichnet, daß zunächst die Einheiten einer jeden Gutsorte (11' bis 18') jeweils für sich gewichtsmäßig bestimmt werden und dann die so ermittelten Einzelgewichte der verschiedenen Gutsorten (11' bis 18') gespeichert werden sowie während der Lagerhaltung wertmäßig verfügbar sind.

6. Vorrichtung zur Durchführung des Verfahrens nach einem oder mehreren der Ansprüche 1 bis 5, d a d u r c h   g e k e n n z e i c h n e t , daß die einzelnen Ablageorte (11 bis 18) der sortenweise getrennten Güter (11' bis 18') im Lager (1o) jeweils als Lastaufnahmen (21' bis 28') eines Gewichtsermittlungsgerätes, nämlich einer Waage, ausgebildet sind und die Datenausgänge dieser Waagen mit den Eingängen (19) eines zentralen Rechners (2o) durch eine automatische Datenübermittlung ( 31 bis 38 bzw. 61) verbunden sind und der Rechner (2o) Datenspeicher (29) für die jeweiligen Einzelgewichte der Einheit (11' bis 18') der verschiedenen Gutsorten aufweist.

7. Vorrichtung nach Anspruch 6, dadurch gekennzeichnet, daß der Rechner (1o) mit Eingabe- (3o), Anzeige-, Ausgabe-(4o), Drucker-, Steuer- und/oder Alarmeinrichtungen versehen ist.

8. Vorrichtung nach Anspruch 6 oder 7, dadurch gekennzeichnet, daß zu Eichzwecken der Rechner (2o) mit einer zur Ermittlung der Einzelgewichte der Einheits- (11' bis 18') der verschiedenen Gutsorten dienenden Präzisionswaage (44) versehen ist, die mit dem Speicher (29) des Rechners (2o) verbunden ist.

9. Vorrichtung nach einem oder mehreren der Ansprüche 6 bis 8, dadurch gekennzeichnet, daß Gestellteile (48; 58) des Ablageorts (48; 55; 58) als Gewichts-Meßwerk (5o, 51; 64) zur Ermittlung des jeweiligen Gesamtgewichts dienen und aus an den Gestellteilen angebrachten Sensoren, insbesondere Dehnungsmeßstreifen (51; 64) bestehen.

lo. Vorrichtung nach Anspruch 9, dadurch gekennzeichnet, daß der Bodenbereich (48; 55) der jeweils als Ablageort dienenden einzelnen Fächer (47; 54) eines Regals (46; 53) als ein mit D-ehnungsmeßstreifen (51) od.dgl. ausgerüsteter Biegebalken /5o) ausgebildet ist.

11. Vorrichtung nach Anspruch 9, dadurch gekennzeichnet, daß das Fahrgestell (58) eines als Ablageort dienenden Transportwagens (53) als Gewichts-Meßwerk (62, 64) ausgebildet ist.

12. Vorrichtung nach einem oder mehreren der Ansprüche 6 bis 11, dadurch gekennzeichnet, daß die Verbindung zur Datenübermittlung zwischen den einzelnen Ablageorten (11 bis 18) und dem zentralen Rechner (2o) aus einer Kabelverbindung (31 bis 38; 31' bis 38', 19) besteht.

13. Vorrichtung nach einem oder mehreren der Ansprüche 6 bis 11, dadurch gekennzeichnet, daß die Verbindung zur Datenübertragung zwischen den jeweiligen Ablageorten (11 bis 18), insbesondere einem verfahrbaren Transportwagen (53), einerseits und dem Rechner (2o) andererseits, aus einer drahtlosen Verbindung über einen Sender (6o) und einem Empfänger von Funkwellen (61), Infrarotstrahlung, Ultraschall od.dgl. besteht.

14. Vorrichtung nach einem oder mehreren der Ansprüche 6 bis 13, dadurch gekennzeichnet, daß jedes Gewichts-Meßwerk außer den jeweils ermittelten Gewichtsdaten auch noch die zur Kennzeichnung der einzelnen Ablageorte dienenden individuellen Symbole (A bis H), insbesondere in Form von Code-Nummern, übermittelt, denen im Speicher (29) des Rechners (2o) eine bestimmte Artikelnummer der dort eingespeicherten Gutsorte und das Einzelgewicht der Einheit (11' bis 18') dieser Gutsorte zugeordnet sind.

15. Vorrichtung nach einem oder mehreren der Ansprüche 6 bis 14, dadurch gekennzeichnet, daß der Rechner (2o) die ermittelten Vorratsmengen (21 bis 28) der einzelnen Gutsorten (11' bis 18') zusammen mit den

Artikelnummmern (A bis H) und ggfs. Ortsangaben der einzelnen Ablageorte (11 bis 18) und ggfs. Zeitangaben der Datenermittlung, einem Bevorratsungerät zuführt (43), welches den Zufluß bzw. Abfluß von Gütern
(11' bis 18') in das Lager (1o) bzw. aus dem Lager steuert.

0063354

FIG.1

0063354

2l2

## FIG.2

## FIG.3

## FIG.4

## FIG.5

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | IBM TECHNICAL DISCLOSURE BULLETIN, Band 21, Nr. 1, Juni 1978, Seite 299, New York, USA H.C. NOMANN: "Automatic computer input of inventory counts" * Insgesamt * | 1,5-7, 9,10, 12 | G 06 F 15/24 G 01 G 19/42 |
| X | US-A-3 605 089 (G.W. GRAY) * Zusammenfassung; Abbildung 1; Spalte 1, Zeilen 50-75; Spalte 2, Zeile 10 - Spalte 5, Zeile 18 * | 1,3,5-7,9,10 ,12,14 | |
| X | US-A-3 426 326 (R.P. GOLDSTEIN) * Spalte 1, Zeile 65 - Spalte 2, Zeile 61; Abbildungen * | 1,5-7, 9,10, 12,15 | RECHERCHIERTE SACHGEBIETE (Int. Cl. ³) |
| A | US-A-3 836 755 (K. EHRAT) * Zusammenfassung; Abbildungen 1,5 * | 1,3-5, 11,13, 14 | G 07 G 1/00 G 06 F 15/24 G 01 G 19/42 G 01 G 19/413 |
| A | US-A-4 108 363 (IIDA SUSUMU) * Zusammenfassung; Abbildungen * | 1-3,5-7,9,10 ,12,14 | |

Der vorliegende Recherchenbericht wurde für alle Patentansprüche erstellt.

| Recherchenort | Abschlußdatum der Recherche | Prüfer |
|---|---|---|
| DEN HAAG | 27-07-1982 | DAVID J.Y.H. |